(19) Europäisches Patentamt
European Patent Office
Office européen des brevets

(11) EP 2 237 025 A2

(12) **EUROPÄISCHE PATENTANMELDUNG**

(43) Veröffentlichungstag:
06.10.2010 Patentblatt 2010/40

(51) Int Cl.:
*G01N 21/84* (2006.01)

(21) Anmeldenummer: 10003399.2

(22) Anmeldetag: 30.03.2010

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA ME RS

(30) Priorität: 03.04.2009 DE 102009015909

(71) Anmelder: Carl Zeiss MicroImaging GmbH
07745 Jena (DE)

(72) Erfinder:
• Mack, Konrad
73457 Essingen (DE)
• Gobel, Jürgen
07749 Jena (DE)
• Wagner, Jörg
07743 Jena (DE)

(74) Vertreter: Loritz, Rainer
Carl Zeiss AG
Konzernfunktion Recht und Patente
Patentabteilung Jena
07740 Jena (DE)

(54) **Verfahren und Vorrichtung zur Charakterisierung einer dünnen Siliziumschicht auf einem lichtdurchlässigen Substrat**

(57) Zur schnellen und unempfindlichen Charakterisierung einer dünnen Siliziumschicht wird von durch die Siliziumschicht transmittiertem und/oder von an der Siliziumschicht reflektiertem Licht mittels mindestens eines optischen Detektors aufgenommen, ein Absorptionsgrad der Siliziumschicht für mindestens eine Wellenlänge anhand des aufgenommenen Lichts vorzugsweise für sichtbares Licht ermittelt und ein Mengenverhältnis zwischen einem amorphen Anteil und einem kristallinen Anteil der Siliziumschicht oder zwischen einem dieser Anteile und der Summe dieser Anteile anhand des Absorptionsgrades (und einer Dicke der Siliziumschicht) ermittelt. Anwendung für die Charakterisierung von Dünnschicht-Solarzellen.

Fig. 3

EP 2 237 025 A2

**EP 2 237 025 A2**

**Beschreibung**

Die Erfindung betrifft ein Verfahren und eine Vorrichtung zur Charakterisierung einer dünnen Siliziumschicht auf einem lichtdurchlässigen Substrat, insbesondere zur Charakterisierung eines Solarzellenrohlings.

Dünnschicht-Solarzellen werden in der Regel auf Glasplatten-Substraten hergestellt. Dabei werden in Hochvakuum-Prozessen dünne Schichten von Silizium (Si) auf den Substraten abgeschieden. Diese Schichten weisen typischerweise Schichtdicken von 100 nm bis 1000 nm auf. Nach dem Abscheiden liegt das Silizium in der Regel als amorphes, also nicht-kristallines Silizium vor. Durch thermische Behandlung, dem sogenannten Tempern, bei Temperaturen von 600 °C bis 700 °C wird das amorphe Silizium (a-Si) teilweise oder vollständig in kristallines Silizium (c-Si) umgewandelt. Das Mengenverhältnis dieser beiden Zustandsformen (amorph zu kristallin oder umgekehrt) ist dabei ein wichtiger technologischer Parameter für die Leistungsfähigkeit der herzustellenden Solarzelle, der je nach Typ der Zelle nur innerhalb vorgegebener Grenzen variieren und daher im Fertigungsprozess kontinuierlich überwacht werden sollte. Das Mengenverhältnis kann beispielsweise Auswirkungen auf den Wirkungsgrad der Solarzelle haben.

Im Stand der Technik beschreibt US 6,657,708 B1 (DE 699 30 651 T2) die optische Charakterisierung einer dünnen Siliziumschicht durch simultane Durchführung einer Raman-Rückstreuungsspektrometrie-Messung und einer (reflektometrischen) Ellipsometrie-Messung. Es wird vorgeschlagen, die kristalline Fraktion, also das Mengenverhältnis von amorphem und kristallinem Silizium, mittels der Raman-Rückstreuungsspektrometrie zu bestimmen. Darüber hinaus können Dicke und Rauheit der Siliziumschicht im reflektierten Licht mittels der Ellipsometrie, also anhand der Änderung von Polarisationseigenschaften, bestimmt werden.

Diese Form der optischen Charakterisierung hat den Nachteil, dass die Raman-Spektrometrie aufwendig und langsam ist, da äußerst geringe Streulichtintensitäten detektiert werden müssen und zudem die Genauigkeit der Messung stark von der relativen Lage und geometrischen Ausrichtung von Probe und Detektor abhängt. Das beschriebene Vorgehen ist dadurch zur wiederholten Messung während eines kontinuierlichen Herstellungsprozesses (engl. "in line") oder bei der fortlaufenden Prüfung von großflächigen Siliziumschichten wenig geeignet, da hier die geometrische Ausrichtung nicht konstant ist und nur eine kurze Messzeit zur Verfügung steht. Die Raman-Spektrometrie wird daher in der Praxis ausschließlich im Labor zur Untersuchung von Stichproben verwendet.

Dieselben Nachteile treffen in noch stärkerem Maße auf das im Stand der Technik bekannte Verfahren der Röntgenbeugung zu. Zudem sind die dafür verfügbaren Geräte prinzipbedingt voluminös und die Prüfung großflächiger Proben schwierig zu realisieren.

Der Erfindung liegt die Aufgabe zugrunde, ein Verfahren und eine Vorrichtung zur Charakterisierung einer dünnen Siliziumschicht auf einem lichtdurchlässigen Substrat, insbesondere zur Charakterisierung eines Solarzellenrohlings, anzugeben, mittels derer die optische Charakterisierung in kurzer Zeit und mit geringer Empfindlichkeit gegenüber relativen Lage- oder Ausrichtungsveränderungen möglich ist. Insbesondere soll so die Charakterisierung großflächiger, bewegter Produkte fortlaufend mit hohem Durchsatz ermöglicht werden.

Die Aufgabe wird gelöst durch ein Verfahren, welches die in Anspruch 1 angegebenen Merkmale aufweist, und durch eine Vorrichtung, welche die in Anspruch 8 angegebenen Merkmale aufweist.

Vorteilhafte Ausgestaltungen der Erfindung sind in den Unteransprüchen angegeben.

Die Absorption von Licht in Materie wird durch das Lambert-Beersche Gesetz beschrieben: $I_{Rest} = I_0 \cdot e^{-\alpha d}$, wobei $I_0$ die ursprüngliche Lichtintensität, $d$ die durchdrungene Materialdicke, $I_{Rest}$ die nach der Durchdringung verbleibende Restintensität und $\alpha$ der Absorptionskoeffizient des Materials ist.

Erfindungsgemäß wurde erkannt, dass bei einer dünnen Siliziumschicht, insbesondere bei Dünnschicht-Solarzellenrohlingen, zwischen den beiden Zustandsformen (amorph, kristallin) des Siliziums große Unterschiede in der Absorption von Licht vorliegen, so dass durch Messung eines Absorptionsgrades von Licht die Zusammensetzung der Siliziumschicht bezüglich der Zustandsformen in kürzerer Zeit als im Stand der Technik und mit geringer Empfindlichkeit gegenüber relativen Lage- und/oder Ausrichtungsveränderungen zwischen Detektor und Probe optisch charakterisiert werden kann. Es ist demgemäß vorgesehen, zur Charakterisierung einer dünnen Siliziumschicht folgende Schritte auszuführen:

- Aufnehmen von durch die Siliziumschicht transmittiertem und/oder von an der Siliziumschicht reflektiertem Licht mittels mindestens eines optischen Detektors,
- Ermitteln eines Absorptionsgrades der Siliziumschicht für mindestens eine Wellenlänge anhand des aufgenommenen Lichts und
- Ermitteln eines Mengenverhältnisses zwischen einem amorphen Anteil und einem kristallinen Anteil der Siliziumschicht anhand des Absorptionsgrades (und einer Dicke der Siliziumschicht) oder zwischen einem dieser Anteile und der Summe dieser Anteile anhand des Absorptionsgrades (und einer Dicke der Siliziumschicht). Zweckmäßigerweise wird das Mengenverhältnis anschließend als charakteristisches Signal ausgegeben oder ohne Ausgabe weiterverarbeitet. Das Verfahren kann auch das Steuern einer Lichtquelle zum Beleuchten der Siliziumschicht während der Aufnahme umfassen.

Als Absorptionsgrad wird im Sinne der Erfindung jede Größe angesehen, die die Stärke der Absorption von Licht einer gegebenen Wellenlänge in der dünnen Schicht beschreibt, beispielsweise ein Absorptionskoeffizient oder ein Quotient einer Beleuchtungs- und einer Transmissionsintensität (oder einer Beleuchtungs- und einer Reflexionsintensität) oder umgekehrt. Als Mengenverhältnis wird jede Größe angesehen, die die relativen Mengen von amorphem und kristallinem Silizium beziehungsweise den relativen Anteil einer Zustandsform an der gesamten durchstrahlten Siliziummenge beschreibt, beispielsweise ein Stoffmengen-, ein Konzentrations- oder ein Massenverhältnis von amorphem zu kristallinem Silizium oder umgekehrt.

Eine erfindungsgemäße Vorrichtung zur Charakterisierung einer dünnen Siliziumschicht auf einem lichtdurchlässigen Substrat, insbesondere zur Charakterisierung eines Solarzellenrohlings, weist mindestens einen optischen Detektor zum Aufnehmen von durch die Siliziumschicht transmittiertem und/oder von an der Siliziumschicht reflektiertem Licht sowie eine Steuereinheit zur Durchführung der obigen Verfahrensschritte auf. Die Vorrichtung kann vorteilhafterweise eine Lichtquelle zur Beleuchtung der Siliziumschicht während der Aufnahme aufweisen. Zur Beleuchtung, Lichtaufnahme und Ermittlung des Absorptionsgrades kann beispielsweise das in DE 195 28 855 A1, deren Offenbarungsgehalt hier in vollem Umfang einbezogen wird, beschriebene Verfahren beziehungsweise die dort beschriebene Vorrichtung verwendet werden.

Beispielsweise kann das Mengenverhältnis unter Ermittlung des Absorptionsgrads für lediglich eine einzelne Wellenlänge, genauer gesagt in einem einzelnen engen Wellenlängenbereich, ermittelt werden, indem der Absorptionsgrad mit in einer Tabelle vorgespeicherten Werten für eine Reihe verschiedener Mengenverhältnisse bei gegebener Wellenlänge und Schichtdicke verglichen und insbesondere zwischen solchen Werten interpoliert wird. Es sind keine komplexen Rechenoperationen erforderlich. In diesem Fall ist jedoch zunächst eine Messung der Schichtdicke erforderlich. Dies kann beispielsweise bei derselben einzelnen Wellenlänge vor dem Tempern der Siliziumschicht erfolgen, solange die Siliziumschicht noch vollständig amorph ist. Da hier der Absorptionskoeffizient bekannt ist, kann mittels einer Absorptionsgradbestimmung aus dem Lambert-Beer-Gesetz die Schichtdicke abgeleitet werden. Alternativ ist die Bestimmung der Schichtdicke aus einem im VIS-NIR Bereich detektierten Interferenzspektrum möglich. Das Interferenzspektrum resultiert aufgrund der geringen Dicke der Siliziumschicht aus der teilweisen Reflexion des Beleuchtungslichts an den Schichtgrenzen. Seine Zusammensetzung hängt von der Schichtdicke ab, so dass die Dicke aus dem Spektrum ermittelt werden kann.

Besonders bevorzugt sind Ausführungsformen, in denen die Ermittlung des Absorptionsgrades, der für die Ermittlung des Mengenverhältnisses verwendet wird, für eine Wellenlänge (genauer gesagt einen engen Wellenlängenbereich) sichtbaren Lichts erfolgt. Im Sinne der Erfindung ist sichtbares Licht elektromagnetische Strahlung, die eine oder mehrere Wellenlängen zwischen 380 nm und 750 nm umfasst. Im sichtbaren Licht sind die Absorptionsunterschiede zwischen a-Si und c-Si so groß, dass eine hohe Genauigkeit des zu ermittelnden Mengenverhältnisses ermöglicht wird. Vorzugsweise wird eine Wellenlänge zwischen 450 nm und 680 nm und weiter vorzugsweise eine Wellenlänge zwischen 500 nm und 660 nm verwendet. In diesen Bereichen sind die Unterschiede der Absorptionsfunktionen besonders groß, so dass eine noch höhere Genauigkeit des Mengenverhältnisses erzielt werden kann.

Zusätzlich oder alternativ zur Messung eines oder mehrerer Absorptionsgrade im sichtbaren Wellenlängenbereich ist es auch möglich, einen oder mehrere Absorptionsgrade im ultravioletten Wellenlängenbereich (Wellenlängen von weniger als 380 nm) und/oder im infraroten Wellenlängenbereich (Wellenlängen von mehr als 750 nm) zu ermitteln und zur Bestimmung des Mengenverhältnisses der Zustandsformen des Siliziums zu verwenden.

Vorzugsweise wird als optischer Detektor ein Spektrometer verwendet und für mehrere Wellenlängen ein jeweiliger Absorptionsgrad ermittelt, wobei das Mengenverhältnis anhand mehrerer dieser Absorptionsgrade ermittelt wird. Die Verwendung mehrerer Absorptionsgrade einer entsprechenden Anzahl von Wellenlängen ermöglicht die Bestimmung des Mengenverhältnisses der Zustandsformen mit höherer Genauigkeit, da beispielsweise Fehler, die aus Interferenz oder anderen Artefakten herrühren, auf diese Weise vermindert werden. Als Spektrometer kann beispielsweise die in DE 100 10 213 A1, deren Offenbarungsgehalt hier in vollem Umfang einbezogen wird, beschriebene optische Messvorrichtung verwendet werden. Insbesondere kann das Mengenverhältnis ausschließlich anhand von für Wellenlängen sichtbaren Lichts bestimmten Absorptionsgraden ermittelt werden.

Vorteilhafterweise kann anhand mehrerer Absorptionsgrade neben dem Mengenverhältnis eine Dicke der Siliziumschicht ermittelt und insbesondere ausgegeben werden. Dadurch kann auf eine separate Messung verzichtet werden, was eine simultane Überwachung von Zusammensetzung und Dicke einer dünnen Siliziumschicht ermöglicht. Die Messvorrichtung vereinfacht sich dabei im Vergleich zum Stand der Technik. Beispielsweise ist die Bestimmung der Schichtdicke aus einem mehrkanalig detektierten Interferenzspektrum im VIS-NIR Bereich möglich.

Vorteilhafterweise kann als charakteristisches Signal zusätzlich oder anstelle des Mengenverhältnisses anhand des Absorptionsgrads oder anhand mehrerer Absorptionsgrade ein Grad einer Wasserstoffdotierung in amorphem Silizium ermittelt und insbesondere ausgegeben werden. Der Grad der Wasserstoffdotierung stellt wie auch die Zusammensetzung der Siliziumschicht einen technologischen Parameter des Herstellungsprozesses dar, der unter Umständen zu überwachen ist. Beispielsweise hat er Einfluss auf die elektrische Leitfähigkeit der Siliziumschicht. Die Messung und Überwachung ist mit hoher Genauigkeit und in kurzer Zeit möglich. Dabei werden wiederum der unterschiedliche Absorptionsverlauf für wasserstoffdotiertes und undotiertes Silizium im Spektralbereich zwischen etwa 900 nm und 1200 nm genutzt, um aus dem Absorptionsgrad (oder mehreren Absorptionsgraden) den Dotierungsgrad zu ermitteln. Auch dies gelingt beispielsweise mittels einer Lambert-Beer-Gleichung für eine Wellenlänge oder eines Systems solcher Gleichungen für mehrere Wellenlängen.

Vorzugsweise werden die Verfahrensschritte an einer anderen Stelle der Siliziumschicht wiederholt, insbesondere nach oder während einer Bewegung des Substrats und der Siliziumschicht relativ zum Detektor mittels einer Transportvorrichtung. Dies ermöglicht die Messung und Überwachung von lokalen Mengenverhältnissen auf großflächigen Proben in einem fortlaufenden Prozess. Die lokalen Messergebnisse samt Ortsangabe bezüglich der Probe stellen gleichsam eine Kartierung (engl. "mapping") der großflächigen Probe dar. Mit ihrer Hilfe können beispielsweise Probenbereiche mit unterschiedlichen Eigenschaften separiert und im weiteren Verlauf der Fertigung oder des Vertriebs verschieden behandelt werden. Die erfindungsgemäße Vorrichtung weist zweckmäßigerweise eine Transportvorrichtung zur Bewegung des Substrats und der Siliziumschicht relativ zum Detektor auf. Dabei ist vorzugsweise eine Steuerung der Transportvorrichtung mit der Steuereinheit verbunden, wobei die Steuereinheit Licht in Abhängigkeit einer Bewegung der Transportvorrichtung aufnimmt. Die Messung in Abhängigkeit der Bewegung ermöglicht die Bestimmung des ortsaufgelösten Mengenverhältnisses mit hoher Genauigkeit in kürzester Zeit und damit die Ausgabe des Mengenverhältnisses als Funktion des Ortes auf der Probe (dem Substrat).

Haupteinsatzzweck der Erfindung ist die Herstellung von Solarzellen, wobei die Siliziumschicht und das Substrat Teile eines Solarzellenrohlings sind.

Die Erfindung umfasst auch ein Computerprogramm und eine Steuereinheit, die zur Durchführung eines erfindungsgemäßen Verfahrens eingerichtet sind. Insbesondere erfolgt die Einrichtung modulweise mit folgenden Modulen:

- ein Softwaremodul zum Aufnehmen von durch die Siliziumschicht transmittiertem und/oder von an der Siliziumschicht reflektiertem Licht mittels mindestens eines optischen Detektors,
- ein Softwaremodul zum Ermitteln eines Absorptionsgrades der Siliziumschicht für mindestens eine Wellenlänge anhand des aufgenommenen Lichts und
- einem Softwaremodul zum Ermitteln eines Mengenverhältnisses zwischen einem amorphen Anteil und einem kristallinen Anteil der Siliziumschicht oder zwischen einem dieser Anteile und der Summe dieser Anteile anhand des Absorptionsgrades. Daneben kann ein Softwaremodul zum Steuern einer Lichtquelle zum Beleuchten der Siliziumschicht während der Aufnahme vorgesehen sein. Auch kann ein Softwaremodul zum Ausgeben des Mengenverhältnisses als charakteristischen Wert vorgesehen sein. Es können mehrere oder alle der oben einzeln aufgeführten Softwaremodule als gemeinsames Softwaremodul ausgeführt sein.

In besonders bevorzugten Ausführungsformen der erfindungsgemäßen Vorrichtung ist der Detektor an einer Traverse angeordnet und kann dabei relativ zur Siliziumschicht verschiebbar sein. Dies ermöglicht die Messung von großflächigen Produkten an beliebigen Punkten mit hohem Durchsatz. Optional können längs der Traverse mehrere Detektoren zur simultanen Lichtaufnahme an mehreren Stellen versetzt angeordnet sein. Dadurch kann der Durchsatz der Prozessüberwachung vergrößert werden.

Zweckmäßigerweise ist der Detektor zur Messung mehrerer Absorptionsgrade unterschiedlicher Wellenlängen als Spektrometer ausgebildet.

Die Beleuchtung der Siliziumschicht erfolgt vorzugsweise über eine Kollimationsoptik.

Vorteilhafterweise kann ein zweiter optischer Detektor vorgesehen werden, wobei der erste Detektor zur Aufnahme transmittierten Lichts und der zweite Detektor zur Aufnahme reflektierten Lichts angeordnet ist. Die simultane Messung in Transmission und Reflexion ermöglicht eine höhere Genauigkeit der Ermittlung des charakteristischen Mengenverhältnisses.

Insbesondere für dünne Schichten mit geringer absoluter Absorption wird vorteilhafterweise mindestens ein Spiegel zur Umlenkung des zu detektierenden Lichts derart angeordnet, dass die Siliziumschicht sequentiell mehrfach durchstrahlt wird.

Nachfolgend wird die Erfindung anhand von Ausführungsbeispielen näher erläutert.

In den Zeichnungen zeigen:

Fig. 1 eine Vorrichtung zum Charakterisieren eines Dünnschicht-Solarzellenrohlings,

Fig. 2 ein Flussdiagramm des Verfahrens zum Charakterisieren,

Fig. 3 Messergebnisse für Transmissionsgrade von diffusem Beleuchtungslicht,

Fig. 4 Messergebnisse für Transmissionsgrade von kollimiertem Beleuchtungslicht,

Fig. 5 eine alternative Vorrichtung mit ausschließlich kollimiertem Licht und

Fig. 6 eine weitere alternative Vorrichtung mit mehrfacher Absorption.

In allen Zeichnungen tragen übereinstimmende Teile gleiche Bezugzeichen.

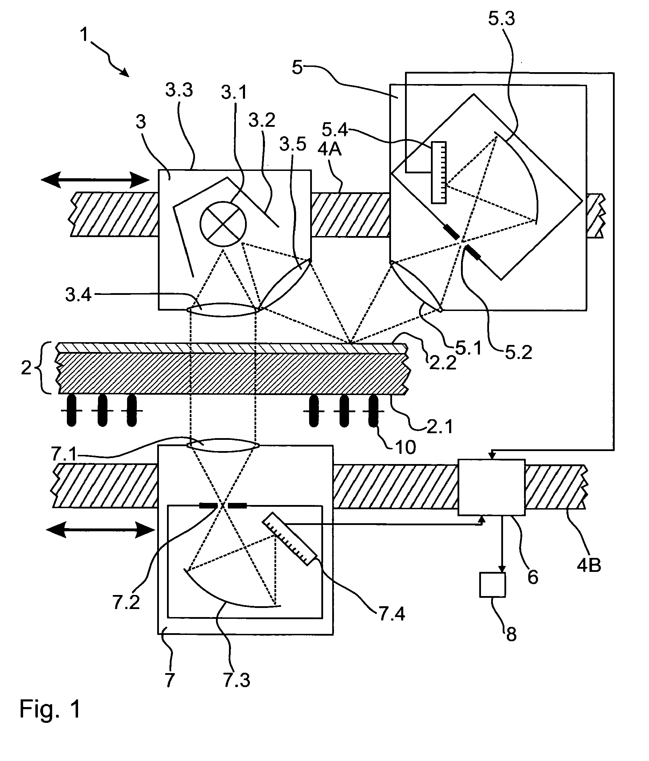

**Fig. 1** zeigt eine schematische Darstellung einer rein beispielhaften Vorrichtung 1 zum Charakterisieren eines Dünnschicht-Solarzellenrohlings 2, der aus einem durchsichtigen Glassubstrat 2.1 und einer dünnen Siliziumschicht 2.2 besteht. Oberhalb des Solarzellenrohlings 2 ist eine Lichtquelle 3 zur Beleuchtung des Solarzellenrohlings 2 verschiebbar an einer Traverse 4(A+B) angeordnet, die zwei starr miteinander verbundene Teile 4A und 4B umfasst. Die Lichtquelle 3 umfasst eine beispielhafte Halogenlampe 3.1, einen Reflektor 3.2 zur Effizienzsteigerung und ein Gehäuse 3.3, in das Optiken 3.4 und 3.5 eingelassen sind. Die Halogenlampe emittiert beispielsweise in einem Wellenlängenbereich von 350 nm bis 2200 nm ultraviolettes (UV), sichtbares (VIS) und infrarotes (IR) Licht. Die erste Optik 3.4 ist eine Kollimationsoptik zur Bildung eines parallelen Strahlenbündels, welches die Siliziumschicht 2.2 und das Substrat 2.1 durchdringt. Das Strahlenbündel weist beispielsweise einen Durchmesser von etwa 2 mm auf. Im Gegensatz dazu ist die zweite Optik 3.5 so ausgebildet und angeordnet, dass das Beleuchtungslicht der Lampe 3.1 in die Siliziumschicht 2.2 fokussiert wird, wobei der Messfleck einen Durchmesser von beispielsweise etwa 2 mm aufweist. Im an der Siliziumschicht 2.2 reflektierten Teil des Beleuchtungslichts ist ein erster Detektor 5 in Form eines Spektrometermesskopfs ebenfalls verschiebbar an der Traverse 4 angeordnet, wobei er eine feste Lagebeziehung zur Lichtquelle 3 aufweist. Der Detektor weist beispielhaft eine Eingangsoptik 5.1, einen Spalt 5.2, ein abbildendes Gitter 5.3 und einen eindimensional ortsauflösenden optoelektronischen Empfänger 5.4, beispielsweise in Form einer CCD-Zeile oder eines Photodetektorenfelds (engl. "photo diode array"; PDA) mit beispielhaften 32 Elementen, auf, wobei die Eingangsoptik 5.1 den Ort der Reflexion in der Siliziumschicht 2.2 auf den Spalt 5.2 abbildet.

Unterhalb des Solarzellenrohlings 2 ist im Durchlicht der Lichtquelle 3 ein zweiter Detektor 7 in Form eines weiteren Spektrometermesskopfs ebenfalls an der Traverse 4 befestigt, wobei auch er eine feste Lagebeziehung zur Lichtquelle 3 aufweist. Zweckmäßigerweise ist der zweite Detektor 7 weitgehend identisch mit dem ersten Detektor 5 aufgebaut und weist einen Spalt 7.2, ein abbildendes Gitter 7.3 und einen eindimensional ortsauflösenden optoelektronischen Empfänger 7.4 auf, wobei die Eingangsoptik 7.1 den kollimierten Strahl auf den Spalt 7.2 fokussiert. Beide Empfänger 5.4, 7.4 sind beispielsweise zur Datenübertragung über flexible Kabel elektrisch mit einer Steuereinheit 6 verbunden, die beispielhaft ebenfalls an der Traverse 4 befestigt ist. Die Traverse 4 umfasst den Solarzellenrohling 2, der in einer Transportvorrichtung, beispielsweise einem Rollentisch mit Rollen 10, zwischen den Traversenteilen 4A, 4B hindurch bewegbar gelagert ist. Die Lichtquelle 3 und die Detektoren 5, 7 sind zur Verschiebbarkeit beispielsweise gemeinsam längs der Traverse 4 verschiebbar. Die Spektrometer werden zweckmäßigerweise vor Messbeginn kalibriert, entweder mit Luft als Kalibriermedium oder mittels eines oder mehrerer Standards (Hell/Weiß, Dunkel/Schwarz) anstelle des Solarzellenrohlings 2. Die Gitter 5.3 und 7.3 dienen zur Abbildung des betreffenden Spalts 5.2/7.2 auf den jeweiligen Empfänger 5.4/7.4, wobei das einfallende Licht räumlich-spektral aufgespalten wird, so dass die Ortsauflösung des Empfängers eine spektrale Auflösung ermöglicht, im Falle von 32 Elementen in 32 Wellenlängenbereiche. Die Steuereinheit 6 ermittelt anhand der detektierten Lichtintensitäten für mehrere oder alle der mit den Empfängern 5.4/7.4 aufgelösten Wellenlängenbereiche entsprechende Absorptionsgrade, aus denen sie ein Mengenverhältnis von c-Si und a-Si ermittelt und als charakteristisches Signal ausgibt. Sie ist zur Übertragung des charakteristischen Signals mit einer Ausgabeeinheit 8 verbunden, die beispielsweise in Abhängigkeit des charakteristischen Signals eine Warnung ausgibt, wenn eine vorgegebene Zusammensetzung der Siliziumschicht 2.2 nicht eingehalten wird. Die Vorgabe kann beispielsweise aus Wertebereichsgrenzen eines akzeptablen Mengenverhältnisses bestehen.

In alternativen Ausgestaltungen (nicht abgebildet) kann auch nur ein erster Detektor 5 oder nur ein zweiter Detektor 7 (ohne ersten Detektor 5) zur Messung entweder in Transmission oder in Reflexion angeordnet sein. Es ist sowohl mit einem als auch mit zwei Detektoren möglich, zur Durchlichtmessung diffus zu beleuchten, wobei die betreffende Eingangsoptik entsprechend einzurichten ist. Es ist auch möglich, zwei separate Lichtquellen für Durchlicht- und Auflichtmessung zu verwenden. Allgemein können die Spektrometer im Detail beispielsweise wie in DE 100 10 213 A1 ausgebildet sein. Auch jede andere Detektorausgestaltung kann verwendet werden. Alternativ zu einer zweiteiligen Traverse 4(A+B), die einstückig oder mehrstückig ausgebildet sein kann, können separate Traversen 4A, 4B für Lichtquelle 3 und zweiten Detektor 7 verwendet werden. Auch kann eine separate Traverse (nicht abgebildet) für den ersten Detektor 5 verwendet werden. In allen Fällen ist eine feste relative Lagebeziehung und relative Ausrichtung zwischen Detektor(en) und Lichtquelle(n) sicherzustellen. In allen Ausführungsformen ist es möglich, entweder ausschließlich reflektiertes Licht oder ausschließlich transmittiertes Licht oder beides zu messen. Auf eine zweite Beleuchtungsoptik kann dann verzichtet werden.

In einer besonderen Ausgestaltung der Vorrichtung 1 ist ein Lichtleiter mit vorgeschalteter Einkoppeloptik zur unmittelbaren Aufnahme von Referenzlicht von der Lichtquelle 3 angeordnet (nicht abgebildet; für eine konkrete Ausgestaltung wird beispielsweise auf DE 100 10 213 A1 oder DE 195 28 855 A1 verwiesen). Dadurch kann auf eine separate Kalibrierung der Vorrichtung 1 verzichtet werden.

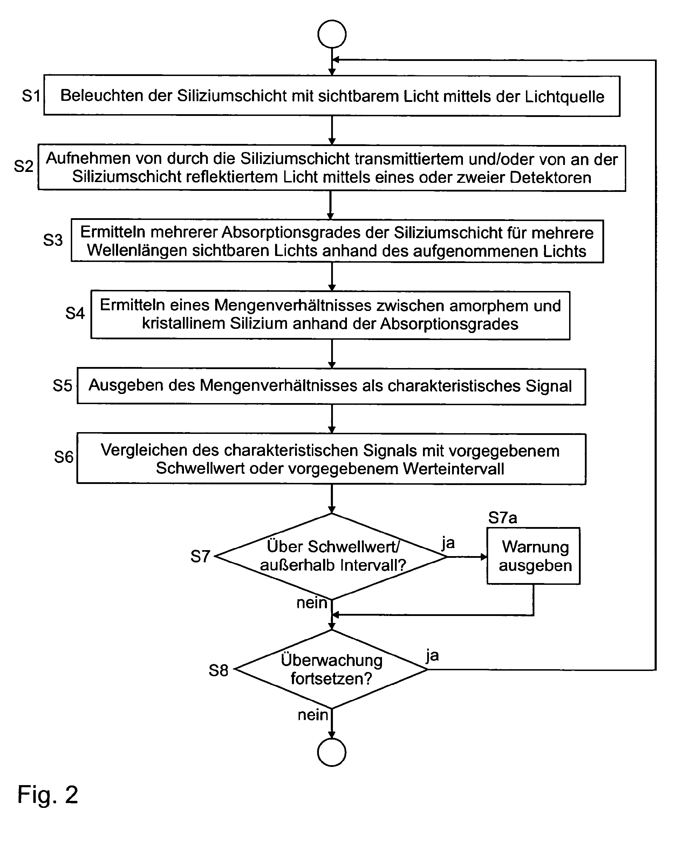

Die Steuereinheit 6 führt zur Charakterisierung des Solarzellenrohlings 2 anhand seiner Zusammensetzung aus den Zustandsformen des Siliziums beispielsweise das in **Fig. 2** schematisch dargestellte Verfahren durch, während sich der Solarzellenrohlings 2 im Herstellungsprozess senkrecht zur Traverse 4 bewegt. Die Siliziumschicht 2.2 wird dabei mittels der Lichtquelle 3 beispielsweise permanent oder nur während einer Lichtaufnahme beleuchtet (Schritt S1). Währenddessen wird mittels der Detektoren 5, 7 (alternativ nur mit einem einzelnen Detektor 5 oder 7) Licht von der Siliziumschicht 2.2 aufgenommen (Schritt S2). Mit dem Auflichtdetektor 5 wird reflektiertes Licht aufgenommen, mit dem Durchlichtdetektor 7 wird transmittiertes Licht aufgenommen. In beiden Fällen wird das Licht aufgrund der räumlich-spektralen Zerlegung im detektoreigenen Spektrometer nach Wellenlängen separiert detektiert, so dass Intensitäten für mehrere Wellenlängen simultan aufgenommen werden können. Dabei genügt für eine hinreichend genaue Charakterisierung der Zusammensetzung eine Messdauer von beispielsweise 50 ms für eine einzelne Messung, wobei eine einzelne Messung in diesem Sinne alle simultan aufnehmbaren Wellenlängen umfasst.

Anschließend wird aus den gemessenen Intensitäten des aufgenommenen Lichts für mehrere Wellenlängen, insbesondere für alle, jeweils für die Auflichtmessung und für die Durchlichtmessung ein Absorptionsgrad ermittelt (Schritt S3). Alternativ können die Absorptionsgrade nur anhand einer Auflichtmessung oder nur anhand einer Durchlichtmessung ermittelt werden. Beispielhaft sei angenommen, es würden drei Absorptionsgrade $A_{i,R/T}$ (i=1, 2, 3) für drei verschiedene Wellenlängen $\lambda_i$ ermittelt. Ein jeweiliger Absorptionsgrad kann beispielsweise durch Bildung eines Quotienten aus der gemessenen transmittierten (beziehungsweise reflektierten) Intensität $I_{Rest,R/T}$ und der in der Kalibrierung (oder anhand von Referenzlicht) ermittelten ursprünglichen Intensität $I_{0,R/T}$ des Beleuchtungslichts der Lichtquelle 3 am Ort des Detektors 5 (beziehungsweise 7) ermittelt werden: $A_{i,R/T} = \dfrac{I_{Rest,R/T}(\lambda_i)}{I_{0,R/T}(\lambda_i)}$ . Die Absorptionsgrade aus

Transmission und Reflexion können dann (soweit ermittelt) zur weiteren Auswertung gewichtet gemittelt werden, so dass für jede Wellenlänge ein eigener Absorptionsgrad $A_i$ resultiert.

Anhand der ermittelten Absorptionsgrade $A_i$ ermittelt die Steuereinheit 6 ein Mengenverhältnis zwischen den Zustandsformen amorph und kristallin (Schritt S4).

Dies gelingt auf unterschiedliche Weisen. Beispielsweise sind ihr in Nachschlagetabellen (engl. "look-up tables"; LUT) für eine Vielzahl von Schichtdicken, eine Vielzahl von Mengenverhältnissen und eine Vielzahl von Wellenlängen resultierende Absorptionsgrade vorgegeben, beispielsweise in einem Nur-Lese-Speicher (engl. "read-only memory"; ROM), auf den die Zentraleinheit (engl. "central processing unit"; CPU) der Steuereinheit zugreifen kann (nicht abgebildet). Es handelt sich also um eine Tabelle, in der jeweils einer Kombination von drei Parametern (Schichtdicke, Mengenverhältnis, Wellenlänge) ein resultierender Wert (Absorptionsgrad) zugeordnet ist. Die Zentraleinheit sucht in der Nachschlagetabelle zu dem ermittelten Satz von Absorptionsgraden $A_i$ die am besten passende Parameterkombination. Dabei kann sie vorteilhafterweise zwischen den Tabelleneinträgen interpolieren, um das Mengenverhältnis q der Zustandsformen des Siliziums zu bestimmen.

Eine bevorzugte Methode zur Ermittlung des Mengenverhältnisses q ist die Bildung von Lambert-Beer-Gleichungen $A_i = \cdot e^{-\alpha_i d}$ wobei $\alpha_i$ der jeweilige Absorptionskoeffizient der betreffenden Wellenlängen ist, der sich aus den Anteilen von amorphem und kristallinem Silizium näherungsweise zusammensetzt gemäß $\alpha_i = q_a \alpha_{a,i} + q_c \alpha_{c,i}$ mit $q_a + q_c = 1$, wobei $q_a$ der (Massen-, Volumen- oder Stoffmengen-) Anteil amorphen Siliziums und $q_c$ der (Massen-, Volumen- oder Stoffmengen-) Anteil kristallinen Siliziums sind. Die Absorptionskoeffizienten $\alpha_{a,i}, \alpha_{c,i}$ für amorphes Silizium beziehungsweise für kristallines Silizium in Abhängigkeit der Wellenlänge werden dabei als a-priori-Information vorausgesetzt und können beispielsweise mit Kalibrierschichten aus vollständig amorphem beziehungsweise vollständig auskristallisiertem Silizium ermittelt werden. Durch Lösen der Gleichungen ln $A_i = -(q_a \alpha_{a,i} + (1-q_a)\alpha_{c,i}) d$ können die Anteile der Zustandsformen für jede Wellenlänge ermittelt und beispielsweise für jede Wellenlänge separat ins Verhältnis

$q = \dfrac{q_c}{q_a} = \dfrac{1-q_a}{q_a}$ gesetzt und daraus ein (vorzugsweise gewichteter) Mittelwert bestimmt werden.

Die Materialdicke $d$ muss entweder zuvor separat gemessen werden oder kann vorteilhafterweise durch Ermittlung mindestens eines weiteren Absorptionsgrades A für eine zusätzliche Wellenlänge als Unbekannte aus einem Gleichungssystem mehrerer Lambert-Beer-Gleichungen ermittelt werden.

Beispielsweise betragen für eine Wellenlänge von λ=600 nm bei einer Schichtdicke von d=200 nm der Absorptionskoeffizient für a-Si $\alpha_a$=1 x 10$^5$ cm$^{-1}$ und der Absorptionskoeffizient für c-Si $\alpha_c$=5 x 10$^3$ cm$^{-1}$. Daraus ergibt sich:

- für a-Si $A_{a,T} = \dfrac{I_{Rest}}{I_0} = \exp(-1 \times 10^5 \times 200 \times 10^{-7}) = 0{,}135$ (Transmission von 13,5%) und

- für c-Si $A_{c,T} = \dfrac{}{I_0} = \exp(-5 \times 10^{\ } \times 200 \times 10^{\ }) = 0{,}90$ (Transmission von 90%).

Gemessen wird beispielsweise eine Transmission (ein Transmissionsgrad) von $A_T$=50 % bei 600 nm. Daraus ergibt sich ein effektiver Absorptionskoeffizient von $\alpha$=-(ln(0,5)/200x10$^{-7}$)=3,5 x 10$^4$ cm$^{-1}$, aus dem sich die Anteile von a-Si ($q_A$) und c-Si ($q_C$) berechnen lassen:

$$A_T=\alpha \times d=(q_A \times \alpha1 + q_C \times \alpha2) \times d; \; \alpha=q_A \times \alpha_A+q_C \times \alpha_C \text{ mit } q_C=1-q_A$$

$$\alpha=A_T \times \alpha_A + (1 - A_T) \times \alpha_C$$

$$\alpha=A_T \times \alpha_A + \alpha_C - A_T \times \alpha_C$$

$$A_T=(\alpha - \alpha_C) / (\alpha_A - \alpha_C)$$

Setzt man die obigen Werte ein, ergibt sich:

$$q_A=(3{,}5 \times 10^4 \text{ cm}^{-1} - 5 \times 10^3 \text{ cm}^{-1}) / (1 \times 10^5 \text{ cm}^{-1} - 5 \times 10^3 \text{ cm}^{-1})=0{,}316$$

$$\Rightarrow q_C=0{,}684; \; q=q_C/q_A=2{,}16$$

Am untersuchten Probenort liegt also ein Anteil (Mengenverhältnis zur gesamten durchstrahlten Siliziummenge) von 31,6% a-Si und damit entsprechend ein Anteil von 68,4% c-Si vor. Das Mengenverhältnis von kristallinem zu amorphem Silizium beträgt in der durchstrahlten Siliziummenge 2,16:1.

Alternativ kann zur Bestimmung des Mengenverhältnisses auch eine chemometrische Hauptkomponentenanalyse durchgeführt werden.

Das auf eine dieser Weisen ermittelte Mengenverhältnis q (oder einen oder beide Mengenverhältnisse $q_A$ oder $q_C$) gibt die Steuereinheit 6 als charakteristisches Signal zur Weiterverarbeitung an ein Software- oder Hardwaremodul (nicht abgebildet) aus (Schritt S6) oder wertet es selbst aus. Hier erfolgt beispielsweise ein Vergleich mit einem vorgegebenen Wertebereich (Schritt S7). Sofern der ermittelte Wert q nicht in dem vorgegebenen Wertebereich liegt, wird eine Warnung ausgegeben. Alternativ könnte der Vergleich mit einem der Mengenverhältnisse $q_A$ oder $q_C$ durchgeführt werden.

Die Erfindung nutzt die unterschiedlichen Absorptionsfunktionen von Licht in dünnen Schichten aus kristallinem oder amorphem Silizium in Abhängigkeit der Wellenlänge. So absorbiert beispielsweise eine 400 nm dicke Schicht aus a-Si bei einer Wellenlänge von 500 nm das Beleuchtungslicht zu über 99,99 %, während die Absorption im Falle von c-Si nur etwa 45 % beträgt. Bei einer Wellenlänge von 600 nm beträgt die Absorption etwa 98 % für a-Si und etwa 19 % für c-Si, bei einer Wellenlänge von 700 nm beträgt die Absorption etwa 78 % für a-Si und etwa 9 % für c-Si.

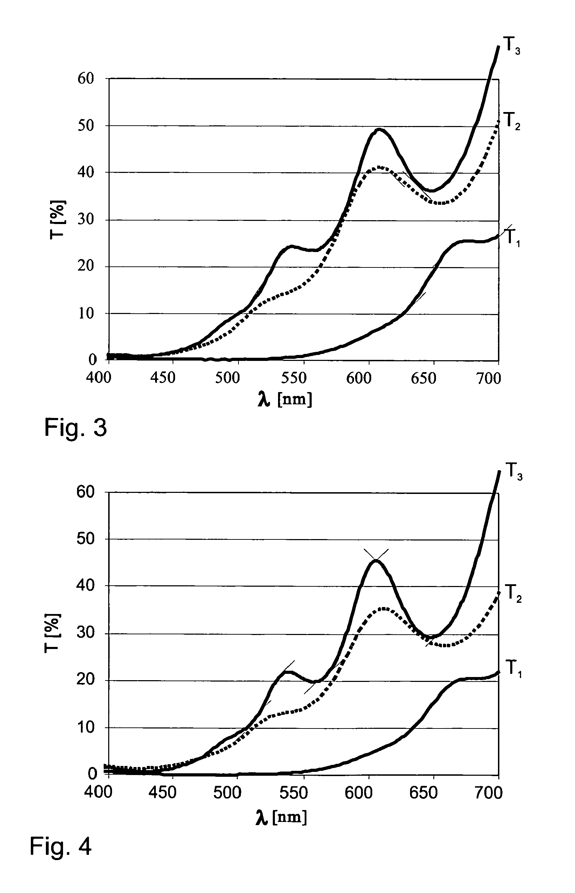

Experimentell gemessene Transmissionsgrade zeigen **Fig. 3** am Beispiel einer Transmission mit diffusem Licht und **Fig. 4** am Beispiel einer Transmission mit kollimiertem Licht. In beiden Fällen wurden dieselben Proben untersucht. Anhand von Raman-Messungen konnte verifiziert werden, dass die Probe, deren Transmissionsgrade von der jeweils unterste Kurve $T_1$ repräsentiert werden, ausschließlich amorphes Silizium aufweist. Die jeweils mittlere Kurve $T_2$ repräsentiert die Transmissionsgrade einer Probe, die amorphe und kristalline Anteile im Raman-Spektrum zeigt. Die jeweils obere Kurve $T_3$ repräsentiert die Transmissionsgrade einer Probe, die ausschließlich kristallines Silizium aufweist.

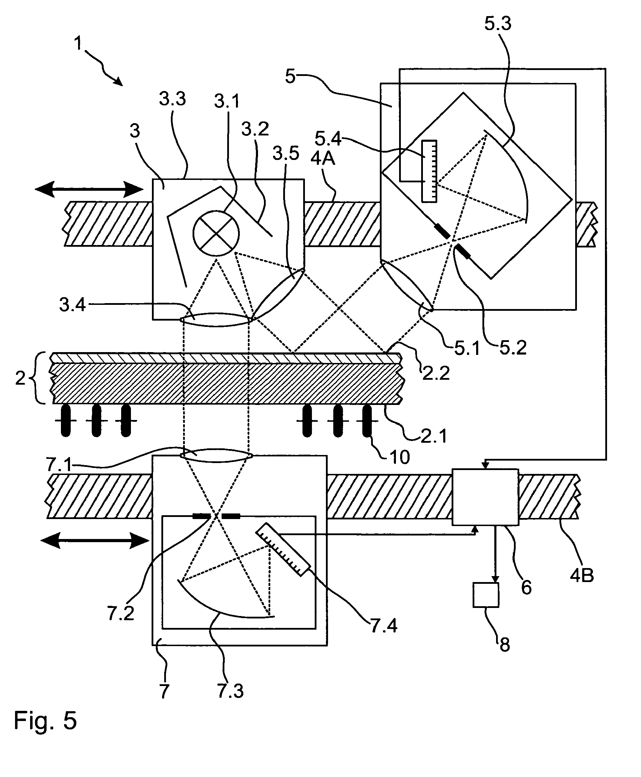

Eine weitere Möglichkeit für den Aufbau einer erfindungsgemäßen Vorrichtung, auch als Transflexion bezeichnet, illustriert **Fig. 5**, in der sowohl für die Messung im reflektierten Licht mittels des ersten Detektors 5 als auch für die Messung im transmittierten Licht mittels des zweiten Detektors 7 paralleles Licht verwendet wird. Zu diesem Zweck sind die Optiken 3.4 und 3.5 als Kollimationsoptiken ausgebildet.

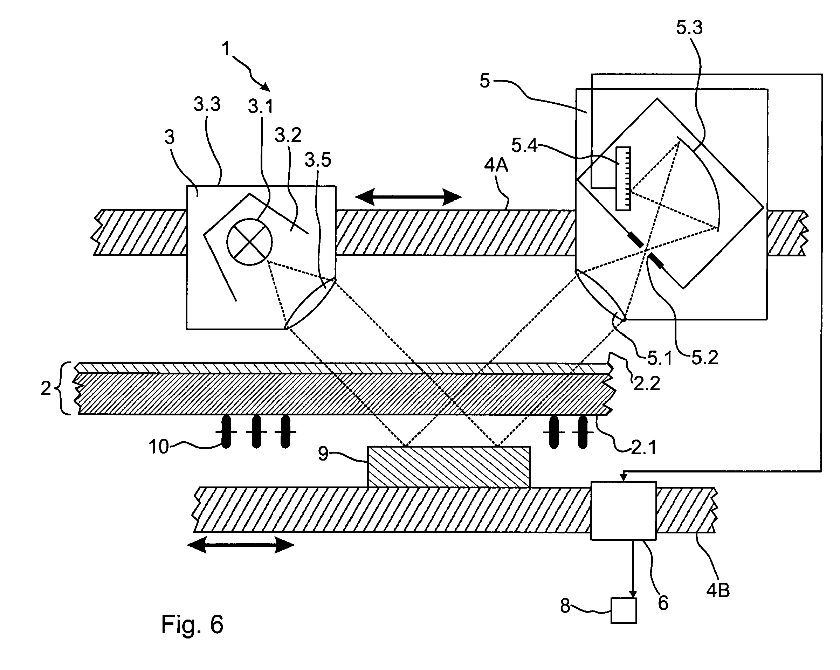

In **Fig. 6** ist eine weitere Ausführungsform dargestellt, bei der ein mehrfacher Durchgang des Beleuchtungslichts durch die Siliziumschicht 2.2 und das Substrat 2.1 stattfindet. Zu diesem Zweck ist ein Spiegel 9 unter dem Solarzellenrohling 2 so angeordnet, dass er das kollimierte Beleuchtungslicht zum Detektor 5 reflektiert. Trotz der Zwischenreflexion handelt es sich um eine Messung von transmittiertem Licht. Entsprechend vergrößert sich die effektive durchstrahlte Materialdicke der Siliziumschicht 2.2 um einen Faktor zwei. In weiteren Ausgestaltungen (nicht abgebildet) können mehrere Spiegel 9 angeordnet werden (oberhalb und unterhalb des Solarzellenrohlings 2), um das Beleuchtungslicht mittels mehrerer Zwischenreflexionen noch öfter durch den Solarzellenrohling 2 zu leiten, bevor es auf den Detektor 5 trifft. Durch eine solche mehrfache Durchleitung und Absorption können auch sehr dünne Siliziumschichten mit hoher Genauigkeit untersucht und ein Mengenverhältnis ihrer Zusammensetzung ermittelt werden. Dies ist insbesondere dann zweckmäßig, wenn Wellenlängen verwendet werden, bei denen unabhängig von der Zustandsform die absolute Absorption niedrig ist.

In allen Ausführungsformen kann anstelle einer waagrechten Ausrichtung des Solarzellenrohlings 2 (oder jedes anderen zu vermessenden Produkts) beispielsweise eine vertikale oder jede andere Ausrichtung vorgesehen sein. Entsprechend ist die Anordnung der Lichtquelle 3 und der Detektoren 5 und 7 beziehungsweise des Detektors 5 oder 7 anzupassen. Auch die Transportvorrichtung ist entsprechend anzupassen, im Falle eines Rollentisches beispielsweise durch beidseitig des Rohlings 2 angeordnete Führungsrollen.

Auf die verschiedenen beschriebenen Weisen können Solarzellen oder andere vergleichbaren Proben bis zu einer Größe von mehreren Quadratmetern im Fertigungsprozess analysiert werden, wobei die typische Messzeit pro Messpunkt 20 ms bis 100 ms beträgt. Zusätzlich kann die Dicke der Siliziumschicht ermittelt und ausgegeben und/oder überwacht werden. Dies vereinfacht die Überwachung der Fertigung weiter.

Bezugszeichenliste

| | |
|---|---|
| 1 | Vorrichtung zum optischen Charakterisieren |
| 2 | Solarzellenrohling |
| 2.1 | Glassubstrat |
| 2.2 | Siliziumschicht |
| 3 | Lichtquelle |
| 3.1 | Halogenlampe |
| 3.2 | Reflektor |
| 3.3 | Gehäuse |
| 3.4 | Erste Beleuchtungsoptik |
| 3.5 | Erste Beleuchtungsoptik |
| 4 | Traverse (A, B) |
| 5 | Erster Detektor |
| 5.1 | Eingangsoptik |
| 5.2 | Spalt |
| 5.3 | Abbildendes Gitter |
| 5.4 | Optoelektronischer Empfänger |
| 6 | Steuereinheit |
| 7 | Zweiter Detektor |
| 7.1 | Eingangsoptik |
| 7.2 | Spalt |
| 7.3 | Abbildendes Gitter |
| 7.4 | Optoelektronischer Empfänger |
| 8 | Ausgabeeinheit |
| 9 | Spiegel |
| 10 | Rolle |

**Patentansprüche**

1. Verfahren zur Charakterisierung einer dünnen Siliziumschicht (2.2) auf einem lichtdurchlässigen Substrat (2.1), insbesondere zur Charakterisierung eines Solarzellenrohlings (2), wobei folgende Schritte ausgeführt werden:

- Aufnehmen von durch die Siliziumschicht (2.2) transmittiertem und/oder von an der Siliziumschicht (2.2) reflektiertem Licht mittels mindestens eines optischen Detektors (5, 7),
- Ermitteln eines Absorptionsgrades der Siliziumschicht (2.2) für mindestens eine Wellenlänge anhand des aufgenommenen Lichts und

- Ermitteln eines Mengenverhältnisses zwischen einem amorphen Anteil und einem kristallinen Anteil der Siliziumschicht oder zwischen einem dieser Anteile und der Summe dieser Anteile anhand des Absorptionsgrades.

2. Verfahren nach Anspruch 1, wobei der Absorptionsgrad für eine Wellenlänge sichtbaren Lichts, vorzugsweise zwischen 450 nm und 680 nm, insbesondere zwischen 500 nm und 660 nm, ermittelt wird.

3. Verfahren nach Anspruch 1 oder 2, wobei als optischer Detektor (5, 7) ein Spektrometer verwendet wird und für mehrere Wellenlängen ein jeweiliger Absorptionsgrad ermittelt wird, wobei das Mengenverhältnis anhand mehrerer dieser Absorptionsgrade ermittelt wird, insbesondere ausschließlich für Wellenlängen sichtbaren Lichts.

4. Verfahren nach Anspruch 3, wobei anhand mehrerer Absorptionsgrade eine Dicke der Siliziumschicht (2.2) ermittelt und insbesondere ausgegeben wird.

5. Verfahren nach einem der vorhergehenden Ansprüche, wobei zusätzlich oder anstelle des Mengenverhältnisses anhand des Absorptionsgrads ein Grad einer Wasserstoffdotierung in amorphem Silizium ermittelt und insbesondere ausgegeben wird.

6. Verfahren nach einem der vorhergehenden Ansprüche, wobei die Verfahrensschritte an einer anderen Stelle der Siliziumschicht (2.1) wiederholt werden, insbesondere nach oder während einer Bewegung des Substrats (2.1) und der Siliziumschicht (2.2) relativ zum Detektor mittels einer Transportvorrichtung (10).

7. Computerprogramm oder Steuereinheit, eingerichtet zur Durchführung eines Verfahrens nach einem der vorhergehenden Ansprüche, insbesondere mit:

   - einem Softwaremodul zum Aufnehmen von durch die Siliziumschicht (2.2) transmittiertem und/oder von an der Siliziumschicht (2.2) reflektiertem Licht mittels mindestens eines optischen Detektors (5, 7),
   - einem Softwaremodul zum Ermitteln eines Absorptionsgrades der Siliziumschicht (2.2) für mindestens eine Wellenlänge anhand des aufgenommenen Lichts und
   - einem Softwaremodul zum Ermitteln eines Mengenverhältnisses zwischen einem amorphen Anteil und einem kristallinen Anteil der Siliziumschicht oder zwischen einem dieser Anteile und der Summe dieser Anteile anhand des Absorptionsgrades.

8. Vorrichtung (1) zur Charakterisierung einer dünnen Siliziumschicht (2.2) auf einem lichtdurchlässigen Substrat (2.2), insbesondere eines Solarzellenrohlings (2), aufweisend mindestens einen optischen Detektor (5, 7) zum Aufnehmen von durch die Siliziumschicht (2.2) transmittiertem und/oder von an der Siliziumschicht (2.2) reflektiertem Licht, **gekennzeichnet durch** eine Steuereinheit (6) zur Durchführung eines Verfahrens nach einem der vorhergehenden Ansprüche.

9. Vorrichtung (1) nach Anspruch 8, **dadurch gekennzeichnet, dass** der Detektor (5, 7) an einer Traverse (4) angeordnet ist, insbesondere verschiebbar relativ zur Siliziumschicht (2.2).

10. Vorrichtung nach Anspruch 8 oder 9, **dadurch gekennzeichnet, dass** der Detektor (5, 7) als Spektrometer ausgebildet ist.

11. Vorrichtung nach einem der Ansprüche 8 bis 10, **gekennzeichnet durch** eine Kollimationsoptik (3.4, 3.5) zur Beleuchtung der Siliziumschicht (2.2) mit kollimierten Licht.

12. Vorrichtung nach einem der Ansprüche 8 bis 11, **gekennzeichnet durch** einen zweiten optischen Detektor (7), wobei der erste Detektor (5) zur Aufnahme transmittierten Lichts und der zweite Detektor (7) zur Aufnahme reflektierten Lichts angeordnet ist.

13. Vorrichtung nach einem der Ansprüche 8 bis 12, **gekennzeichnet durch** eine Transportvorrichtung (10) zur Bewegung des Substrats (2.1) und der Siliziumschicht (2.2) relativ zum Detektor (5, 7).

14. Vorrichtung nach Anspruch 13, **dadurch gekennzeichnet, dass** eine Steuerung der Transportvorrichtung (10) mit der Steuereinheit (6) verbunden ist, wobei die Steuereinheit (6) Licht in Abhängigkeit einer Bewegung der Transportvorrichtung (10) aufnimmt.

**15.** Vorrichtung nach einem der Ansprüche 8 bis 14, **gekennzeichnet durch** mindestens einen Spiegel (9) zur Umlenkung des zu detektierenden Lichts derart, dass die Siliziumschicht (2.2) sequentiell mehrfach durchstrahlt wird.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6657708 B1
- DE 69930651 T2
- DE 19528855 A1
- DE 10010213 A1